# EUROPEAN PATENT APPLICATION

(11) **EP 2 479 074 A2**
(43) Date of publication of application: **25.07.2012**
(21) Application number: 12000477.5
(22) Date of filing: 25.01.2012
(51) Int. Cl.: B60S 5/02, B67D 7/04

(54) **Below ground fuel dispenser system and method for making said fuel dispensing system**

(30) Priority: 25.01.2011 US 201113435978; 20.01.2012 US 201213355027
(71) Applicant: Johnson Controls Technology Company, Holland, MI 49423 (US)
(72) Inventor: Auton, David Randy, 53029 Hartland, Wisconsin (US)
(74) Representative: Wolff, Felix

(57) **Abstract**

A fuel dispensing system is disclosed that includes an above-ground interface (20) and a below-ground dispenser (22). The interface may provide for selecting fuel types and grades and performing conventional fuel purchase transactions. The below-ground dispenser (22) includes control circuitry, one or more pumps and metering components that supply fuel as desired to the above-ground interface (20). The above-ground equipment is coupled to the below-ground equipment via one or more break-away assemblies (36). In the event the above-ground equipment is impacted or torn from the base, the break-away assemblies (36) interrupt the flow of fuel and power. The installation may be serviced by repair and/or replacement of the above-ground interface without adversely affecting the underground dispenser system.

## Description

### BACKGROUND

The present invention relates generally to the field of fuel dispensing systems, and more particularly to a novel arrangement for dispensing fuel in a service station that places a dispenser and related equipment underground.

A wide range of designs have been proposed and are currently in use for fuel dispensing in service stations. For automobiles, for example, such facilities typically include a building or retail store in which an attendant may be stationed, and a surrounding forecourt with islands of pumps for dispensing fuel. Underground tanks store different types and grades of fuel, and piping is routed, typically underground, from these tanks to the islands and dispensers. Beneath the islands, the dispensers may be provided with sumps that can capture fuel that may spill or leak from the dispensing equipment. However, all primary dispensing components, including pumps, meters, point of sale customer interfaces, hoses and nozzles, and so forth are located above the ground level. Power may be provided for such equipment through conduits that are also placed underground and are routed to switchgear or other power supplies, typically at the facility building. In modem service stations, data may be exchanged between the customer interface and electronic accounting systems inside the facility, such as to enable credit card transactions, turning on and off the pumps, selection of grades, exchanging of data with remote control and monitoring equipment and credit card of providers, and so forth.

A persistent problem in such facilities is the potential for the above-ground dispenser to be impacted by a vehicle. In many facilities poles, bars, barriers, and other impediments are positioned adjacent to the islands and dispensers to reduce the risk that the dispenser will be severely impacted. However, each year dispensers are overturned or completely severed from their base, and other accidents occur that result in the exposure of customers and facilities to lose fuel, electrical discharges, and so forth.

There is a need in the field for improved facility designs that reduce the risk of serious injury in the event that a fuel dispenser is impacted by a vehicle. There is a particular need for solutions that may be used with the general layout of existing service stations while providing an enhanced level of serviceability and safety in the event of an accident.

### SUMMARY

In accordance with one aspect of the present invention provides a fuel dispensing system comprising an above-ground point of sale interface configured to permit delivery of fuel to a user, a below-ground dispenser configured to pump fuel from a fuel reservoir to the above-ground point of sale interface, and at least one break-away assembly configured to convey at least fuel to the above-ground point of sale interface from the below-ground dispenser.

The invention also provides a method for making a fuel dispensing system comprising installing a below-ground dispenser configured to pump fuel from a fuel reservoir, and installing an above-ground point of sale interface configured to permit delivery of fuel to a user. The below-ground dispenser is then coupled to the above-ground point of sale interface via a plurality of break-away assemblies configured to convey at least one fuel to the above-ground point of sale interface from the below-ground dispenser

### DRAWINGS

FIGURE 1 is a perspective view of an exemplary fuel service station employing underground fuel dispensers in accordance with aspects of the present techniques;

FIGURE 2 is a diagrammatical representation of an exemplary underground dispenser system with an above-ground point of sale interface as may be used in a service station of the type illustrated in FIGURE 1;

FIGURE 3 is a diagrammatical illustration of certain of the functional components that could be employed in the underground dispenser of FIGURE 2; and

FIGURE 4 is a diagrammatical representation of an alternative configuration for components that could be included in an underground dispensing arrangement.

### DETAILED DESCRIPTION

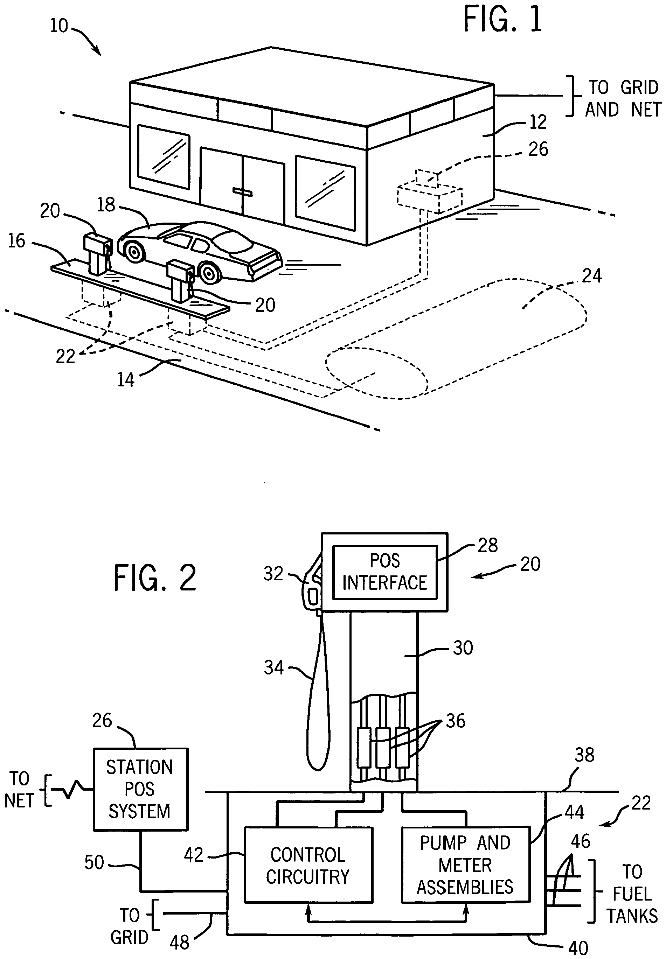

FIGURE 1 illustrates an exemplary fuel service station incorporating underground fuel dispensers in accordance with aspects of the present techniques. As will be appreciated by those skilled in the art, many different physical configurations may be envisaged for the facility, with the facility illustrated in FIGURE 1 being a simplified version as may be used for commercial retail applications. The fuel service station 10 shown in FIGURE 1 comprises a building 12 and a forecourt 14 in which a fueling island 16 is positioned. In many applications, the building may be enlarged to include retail sales establishments, food establishments, and so forth, or the facility may be reduced to allow for a simple cabin in which an operator may be positioned. In certain embodiments, no such operator may be onsite. Similarly, the installation may allow for extensive covers to extend over the facility and/or one or more fueling islands. The forecourt 14 may be much more extensive than that illustrated in FIGURE 1, such that multiple islands for different types of vehicles, different fuel grades, different fuel types, and so forth may be accommodated.

In the illustration of FIGURE 1, one or more lanes is provided adjacent to the fueling island, and vehicles 18 to be fueled may be positioned adjacent to the island to receive fuel. The fueling system itself comprises an above-ground interface 20 and a below-ground dispenser 22. Each dispenser is coupled to a fuel tank 24, which in many cases will also be located below-ground, although in certain cases such equipment may be located above-ground. In many implementations, moreover, the dispensers will be coupled to several such reservoirs to provide different types and grades of fuel. The dispensers are also coupled to a station control and point of sale system 26 which would typically be located within the facility building. As with conventional installations, this system may be coupled to the utility grid to provide power for operation of the facility, and to the Internet to communicate data remotely, obtain authorization for transactions, and so forth.

FIGURE 2 illustrates certain functional components that may be included in the above-ground interface 20 and the below-ground dispenser 22. In the illustrated embodiment, a point of sale interface 28 is provided that may offer a look and feel similar to that of conventional systems. That is, the interface will allow for requesting and performing transactions, such as the selection of fuel types and grades, the input of customer information, credit card transactions, and so forth. The point of sale interface, in the illustrated embodiment, is set atop a pedestal 30. A conventional nozzle 32 and hose 34 are provided for dispensing fuel. As in conventional systems, more than one nozzle and hose may be provided for different fuel types grades.

The above-ground interface 20 also includes a series of break-away assemblies 36. These assemblies allow for interruption of the communication of fuel, power and data in the event the above-ground interface is struck or otherwise damaged. As will be appreciated by those skilled in the art, the break-away assemblies 36 are designed for the particular conduit type, and their construction depends on whether they convey fuel, data or power. For fuel break-away assemblies, for example, the assembly may include a short run of conduit with a check valve at either end to allow for interruption in fuel delivery by fracture of the conduit, with fuel flow being stopped by the check valves. Similar arrangements may be provided for conveying data to and from the above-ground dispenser, as well as for power. The break-away assemblies themselves may be of a conventional type presently commercially available.

Below the ground level, indicated by reference numeral 38, the underground dispenser 22 includes a sump 40 that surrounds equipment for dispensing and metering fuel. The sump 40 may be made of any suitable material, such as fiberglass. The sump serves to house the dispensing equipment as well as to collect any fuel that may leak or may be ejected from the equipment in the event of an accident. The equipment itself includes control circuitry 32 coupled to pump and meter assemblies 44. The control circuitry serves to regulate operation of one or more pumps to draw fuel from one or more fuel reservoirs and to deliver the fuel to the above-ground interface. The control circuitry may also be used to shut off operation of the pumps or any other equipment in the dispenser. The pump and meter assemblies will typically include one or more pumps, along with any associated valving for selecting which fuel type of grade will be delivered to the interface. Such assemblies will also include meters for determining volumetric flow of fuel in accordance with sales made via the point of sale interface. The actual components of the control circuitry and the pump and meter assemblies may essentially be similar to those used in conventional dispenser systems, but are constructed and housed below the ground level 38. Moreover, these components are coupled to fuel lines 46 which enter the sump from fuel tanks for each grade and type of fuel. A power conduit 48 also enters a sump to provide power for operation of the equipment. This power conduit may be in communication with remote switchgear, such as fuses or circuit breakers, and electrical disconnects for interrupting operation of the equipment, where desired. Finally, the circuitry is coupled to the station point of sale systems via a data conduit 50.

In the event of an accident, the above-ground interface 20 may be impacted, bent, or completely removed from the island. In such cases, one or more of the break-away assemblies 36 may be severed, allowing at most a very limited amount of fuel to spill. Further, the flow of fuel will be stopped by the break-way assemblies, as will electrical power and data. The present invention contemplates, then, that the below-ground components will be substantially unaffected, and that the entire system may be placed back into operation by servicing (i.e., prepare and/or replacement) of the above-ground interface.

It should be noted that in a presently contemplated embodiment, only low voltage power and fuel will be provided to the above-ground interface. High voltage components would be provided below ground level to reduce potentials for electric shock and sparks. High voltage above ground level may be provided in certain instances, such as where lighting and other power needs are present. However, where desired, power for such applications may be provided from sources other than the below grade dispenser.

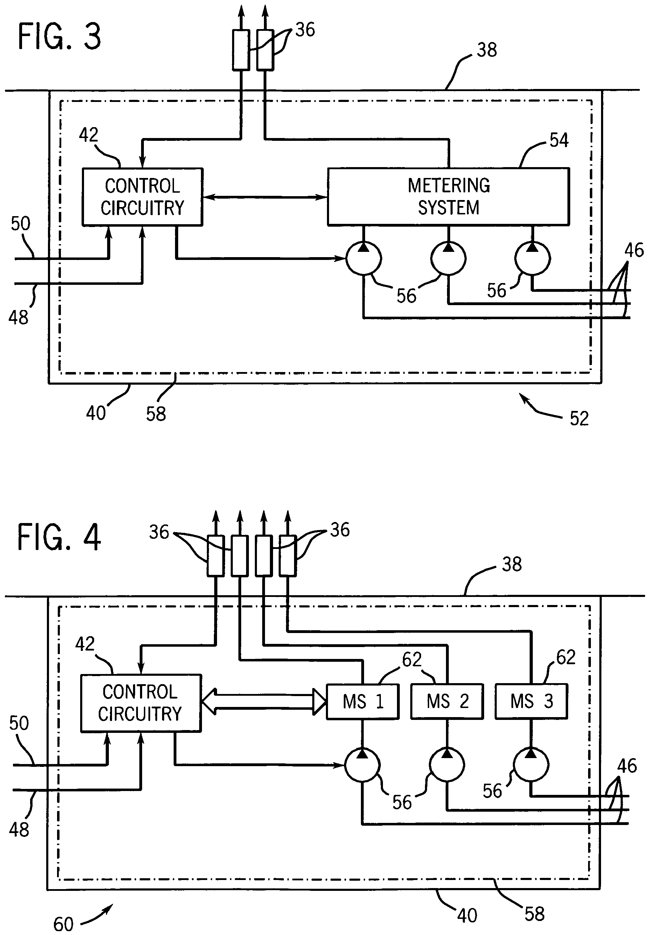

FIGURE 3 illustrates a first possible configuration of individual components within the system described above. As noted above, the components are provided below ground level 38. The illustration of FIGURE 3 corresponds to what may be termed a common meter embodiment 52 in which a single metering system is used for multiple pumps and fuel grades. Such systems may be found, for example, in North America. In the embodiment illustrated in FIGURE 3, the metering system 54 is used to provide fuel from several different pumps 56, each associated with a particular fuel grade. The metering system 54 may thus include valving that allows for directing fuel from the pumps, where desired, as well as for metering flow. The pumps themselves may be switched on and off under the control of control circuitry 42. Here again, the pumps are in fluid communication with reservoirs via fuel lines 46, while the control circuitry is in communication with power and data resources via lines 48 and 50. In the embodiment illustrated in FIGURE 3, these physical components may be mounted in a single raisable structure 58, such as a framework or basket that may be raised from and lowered into sump 40. Such structures may allow for servicing of the equipment by simply raising the entire substructure from the sump.

FIGURE 4 illustrates an alternative embodiment that may be termed a separate meter embodiment 60. Like the embodiment of FIGURE 3, the various components are positioned below the ground level 38, and coupled above the ground level via break-way assemblies 36. In this embodiment, however, a separate metering system 62 is provided for each pump 56. Such arrangements may assist in maintaining the integrity of individual fuel grades between the dispensing equipment and the dispensing hose and nozzle above the ground, and may be found in locations such as Europe.

It should be noted, however, that the variants of FIGURES 3 and 4 may be used in any suitable location, as desired. It should also be noted that the various configurations described above may be subject to adaptation for specific markets. For example, while the present description referred to commercial dispensing systems, the same or similar systems may be employed for industrial fuel dispensing, aircraft installations, fleet fuel dispensing systems, and so forth.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. It is, therefore, to be understood that the appended claims are intended to cover all such modifications and changes as fall within the true spirit of the invention. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. A fuel dispensing system comprising:
an above-ground point of sale interface configured to permit delivery of fuel to a user;
a below-ground dispenser configured to pump fuel from a fuel reservoir to the above-ground point of sale interface; and
at least one break-away assembly configured to convey at least fuel to the above-ground point of sale interface from the below-ground dispenser.

2. The system of claim 1, wherein the below-ground dispenser comprises at least one fuel pump.

3. The system of claim 2, wherein the below-ground dispenser comprises at least one fuel metering device.

4. The system of claim 3, wherein the below-ground dispenser comprises control circuitry for controlling the at least one fuel pump.

5. The system of claim 4, wherein the control circuitry is configured to be coupled to a fueling station facility point of sale system for data exchange.

6. The system according to any one of claims 1, 2, 3, 4, or 5, comprising a sump disposed below the ground level, wherein the below-ground dispenser is disposed in the sump.

7. The system according to any one of claims 1, 2, 3, 4, 5, or 6, wherein the below-ground dispenser is raisable to an above-ground level for servicing.

8. The system according to any one of claims 1, 2, 3, 4, 5, 6, or 7, comprising a plurality of break-away assemblies for conveying different grades or types of fuel to the above-ground point of sale interface from the below-ground dispenser.

9. The system according to any one of claims 1, 2, 3, 4, 5, 6, or 7, comprising a plurality of break-away assemblies for fuel, power and data.

10. The system of claim 9, wherein the plurality of break-away assemblies are configured to convey at least one fuel to the above-ground point of sale interface from the below-ground dispenser, to convey power to the above-ground point of sale interface, and to convey power to the above-ground point of sale interface.

11. A method for making a fuel dispensing system comprising:
installing a below-ground dispenser configured to pump fuel from a fuel reservoir;
installing an above-ground point of sale interface configured to permit delivery of fuel to a user; and
coupling the below-ground dispenser to the above-ground point of sale interface via a plurality of break-away assemblies configured to convey at least one fuel to the above-ground point of sale interface from the below-ground dispenser

12. The method of claim 11, comprising installing a sump at least partially surrounding the below-ground dispenser.

13. The method of claim 12, wherein the below-ground dispenser is raisable from the sump for servicing.

14. The method of claim 11, wherein the below-ground dispenser comprises at least one pump and at least one fuel metering device.

15. The method of claim 14, wherein the below-ground dispenser comprises control circuitry configured to be coupled to a fueling station facility point of sale system for data exchange.
